# EUROPÄISCHE PATENTANMELDUNG

(11) **EP 1 902 767 A1**
(43) Veröffentlichungstag der Anmeldung: **26.03.2008**
(21) Anmeldenummer: 06019923.9
(22) Anmeldetag: 22.09.2006
(51) Int. Cl.: B01D 45/08, B01D 46/10

(54) **Verfahren und Vorrichtung zum Abtrennen von Flüssigkeiten aus einem Gasstrom**

(71) Anmelder: ISI-Industrie-Produkte GmbH, 53567 Buchholz-Mendt (DE)
(72) Erfinder: Mindnich, Lothar, 53757 Sankt Augustin (DE)
(74) Vertreter: Fritz & Brandenburg Patentanwälte

(57) **Zusammenfassung**

Die Erfindung betrifft ein Verfahren und eine Vorrichtung zum Abtrennen von Flüssigkeiten aus einem Gasstrom mit Hilfe von Faservliesmatten, bei dem eine Faservliesmatte mit parallel ausgerichteten, längs gelegten Fasern so in den zu reinigenden Gasstrom eingebracht wird, dass die parallel ausgerichteten, längs gelegten Fasern gleichsinnig zur Schwerkraft orientiert sind, wobei der flüssigkeitshaltige Gasstrom durch das Faservlies mit parallel ausgerichteten, längsgelegten Fasern geführt wird, wobei Tropfen auf der Oberfläche der Fasern durch Abscheiden der Flüssigkeit aus dem Gasstrom ausgebildet werden, durch die Tropfen auf der Oberfläche der Fasern ein Film ausgebildet wird, durch kohäsives Vereinigen von Tropfen Makrotropfen im Vlies ausgebildet werden und die Makrotropfen schwerkraftunterstützt entlang der gleichsinnig zur Schwerkraft ausgerichteten Fasern abgeführt werden.

## Beschreibung

Die Erfindung betrifft ein Verfahren sowie eine Vorrichtung zum Abtrennen von Flüssigkeiten aus einem Gasstrom mit Hilfe von Faservliesmatten.

Das Abtrennen und Reinigen von Gasströmen mit Hilfe von im Gasstrom angeordneten Faservliesmatten ist grundsätzlich bekannt. So offenbart zum Beispiel die EP 0 882 483 B1 ein ringförmig in einem zylindrischen Filtergehäuse angeordnetes Filterelement. Die EP 0 465 843 A1 beschreibt die Anordnung einer Filterbahn in einer Filterkassette, wobei die Filterbahn in Zickzackform in Richtung des zuströmenden Gases aus der Filterkassette heraus und wieder zurück geführt wird. Hierbei wird die Raumform der Filterbahn über bekannte, geeignete Maßnahmen wie z.B. Stützholme und zusätzliche Strukturelemente stabilisiert. Die EP 1 128 892 B1 beschreibt die zickzackförmige Anordnung einer Filterbahn mit Aktivkohlevlies in einer Filterkassette mit seitlich eingefaßten Seitenbändern.

Problematisch für Vorrichtung und Verfahren mit im Gasstrom angeordneten Faservliesmatten ist die Reinigung von Gasströmen, welche mit Flüssigkeiten in variierender Form wie Nebel und/oder kleinen Tröpfchen belastet sind. In der vorliegenden Anmeldung werden die Verunreinigungen in Gasströmen anhand ihrer Eigenschaften wie nachfolgend näher erläutert in verschiedene Klassen eingeteilt.

Aerosole beschreiben schwebfähige Belastungen z. B. in Form kleinster Tröpfchen. Aerosole sind dadurch gekennzeichnet, dass die schwebfähigen Belastungen im Gasstrom in ihrer Form über mehrere Minuten bis hin zu Stunden stabil sind, d.h. keine Agglomeration zeigen und erst über die Adsorbtion an Oberflächen größere Tropfen, Molekel bzw. Aggregate ausbilden.

Als Nebel werden schwebfähige Gruppen von Flüssigkeitstropfen bezeichnet, welche größere Tröpfchen durch Agglomeration ausbilden können. Im Unterschied zu Aerosolen sind Nebel instabil und bilden von sich aus größere, nicht mehr schwebfähige Agglomerate aus, welche sich auf Oberflächen niederschlagen.

Als Tröpfchen werden Flüssigkeitsanteile bezeichnet, welche in der Bewegung im Gasstrom dynamisch suspendiert sind. Ein Tröpfchen weist im Vergleich zu Nebel- oder Aerosoltropfen den größten Durchmesser auf und kann durch Inkontaktbringen mit einer Oberfläche direkt niedergeschlagen werden. Wird der Gasstrom in seiner Bewegung stark verlangsamt, so versagt die dynamische Suspendierung der Tröpfchen im Gas und es kommt zum spontanen Niederschlagen der Tröpfchen.

Im Rahmen der Abtrennung aus einem Gasstrom bilden die Flüssigkeiten zwischen den Fasern der Faservliesmatte Flüssigkeitsbrücken aus. Diese blockieren den steten Gasdurchfluss und erhöhen den Strömungswiderstand. Wird der Strömungsdruck erhöht, um eine konstante Flussgeschwindigkeit des Gases zu gewährleisten, kann es zum Austragen und Ablösen von Flüssigkeitstropfen kommen, wodurch der Wirkungsgrad der Faservliesmatte herabgesetzt wird.

Das Entfernen der Flüssigkeiten aus den belasteten Gasströmen gestaltet sich wie bereits erwähnt besonders schwierig, wenn die Belastung in ihren Eigenschaften fortwährend Veränderungen unterliegt. Kommt es zum Beispiel während der Abtrennung zu einer Abkühlung des Gases, so kann durch Kondensation im Gas weiteres Aerosol ausgebildet werden. Hierbei werden die Filtrationseigenschaften des Faservlieses über Adsorbtion und Desorbtion beeinflusst und gleichzeitig neues Aerosol erzeugt. Dies kann dazu führen, dass das Aerosol nicht mehr adsorptiv auf dem Filtermedium abgeschieden wird und somit im Gasstrom verbleibt. Dieser Effekt kann zusätzlich dadurch verstärkt werden, dass bei uneinheitlicher Abkühlung des Gasstromes im Bereich von erhöhten, schlagartigen Temperaturunterschieden über die Kondensation die nächstgrößere Klasse an Verunreinigung in Form von Nebel ausgebildet wird, welcher sich auf den Fasern des Vlieses niederschlägt. Kommt es schließlich noch zum spontanen Aufziehen von Tröpfchen auf dem Faservliesmaterial, so wird die Adsorbtionsfähigkeit der Materialoberfläche im Rahmen einer Mehrschicht-Adsorbtion der flüssigen Verunreinigung weiterhin verändert.

Die Filtration unterliegt so einem komplexen Wechselspiel von Gaskondensation, Aerosol-Adsorbtion, Niederschlag von Nebel und Aufziehen von Tröpfchen, welches bei schwankender Gastemperatur zusätzlich den entsprechenden Umkehrprozessen verbunden mit der Verdampfung der flüssigen Verunreinigung unterliegt. Kommt es im Rahmen dieses Wechselspiels zu einer lokal erhöhten Ausbildung von Flüssigkeitsbrücken, so erhöhen diese ungleichmäßig den Strömungswiderstand und bewirken im Bereich der geringeren Strömungswiderstände eine erhöhte Durchströmgeschwindigkeit des Gases. Durch die unregelmäßigen Strömungsdrücke und -geschwindigkeiten kann es zur nachfolgenden Kondensation von Aerosol, zum Austragen von Nebel und zum Suspendieren von Tropfen abflussseitig zum Filtermaterial kommen. Ein Filtermaterial mit schwankendem Wirkungsgrad, bei dem die Menge an zurückgehaltener Belastung in Prozent nicht konstant ist, erfordert kostenaufwendige und komplizierte Regelungs- und Steueranlagen, um gegebenenfalls eine nachträgliche Reinigung des Gasstromes gezielt ausführen zu können.

Insbesondere absorbieren die Flüssigkeitsbrücken zusätzlich verstärkt aus dem Gasstrom im Aerosol vorhandene Partikel. Bei schwankenden Temperaturen können die Partikel als Kondensations- und Verdampfungskeime dienen. Im Rahmen der mehrfachen Kondensation sowie Verdampfung können sich auf der Oberfläche der Partikel höhersiedende, hochviskose Anteile der flüssigen Verunreinigung des Gasstromes ansammeln. Dadurch kann es in kürzester Zeit zu oberflächlichen Verkrustungen kommen, welche den Strömungswiderstand der Faservliesmatte drastisch erhöhen. Die vorbeschriebenen Probleme bei inhomogener Durchströmung kommen dabei verstärkt zum Tragen. Zusätzlich schränken die Verkrustungen die Kapazität der Faservliesmatte ein, da deutlich weniger Faservliesmattenvolumen vom Gasstrom durchströmt werden kann. Die Standzeiten der Filterelemente werden durch die im Gas enthaltenen Flüssigkeiten eingeschränkt und die Material- und Personalkosten erhöhen sich durch die in kürzeren Zeitabständen notwendig werdenden Wartungsarbeiten im Rahmen des Austausches der Filterelemente.

Insbesondere stark heterogen belastete Gasströme weisen die zuvor beschriebene Problematik auf. So kann zum Beispiel in der wassergekühlten, schneidenden bzw. spanenden Bearbeitung von spröden Werkstoffen bei Verwendung eines Schneidöls im Gasstrom ein äußerst unterschiedliches Gemisch aus Aerosol, Nebel und Tröpfchen, umfassend Wasser, Schneidöl, Werkstoff- und Schneidmittel-Partikel, anfallen. Hierbei bildet die aus unterschiedlichen, flüssigen Phasen zusammengesetzte, flüssige Verunreinigung unterschiedlich zusammengesetzte Emulsionen sowie mehrphasige Molekel aus. Die Agglomerate im Gasstrom zeigen stark schwankende Verhältnisse von Schneidöl, Wasser und Partikelanzahl. Die Öl-Wasser-Mischungen adsorbieren bzw. absorbieren an Faseroberflächen und/oder Partikeln mit unterschiedlichster Oberflächencharakteristik wie zum Beispiel hydrophilen und lipophilen Eigenschaften. So können verstärkt heterogene Flüssigkeitsbrücken unter beschleunigter Ausbildung von Verkrustungen und vollständig blockierten Faservliesbereichen ausgebildet werden.

Aufgabe der vorliegenden Erfindung ist es, ein Verfahren sowie eine Vorrichtung zur Reinigung von mit Flüssigkeiten belasteten Gasströmen bereitzustellen, welches die Nachteile des Standes der Technik überwindet. Die erfindungsgemäße Lösung der Aufgabe erfolgt gemäß der technischen Merkmale der unabhängigen Ansprüche. Weitere Vorteile der Erfindung ergeben sich aus der nachfolgenden Beschreibung sowie den abhängigen Ansprüchen und Ausführungsbeispielen.

Wesentlich im Sinne der vorliegenden Erfindung ist die Verwendung eines Faservlieses mit parallel ausgerichteten, längs gelegten Fasern. Hierbei bedeutet längs gelegt, dass die ausgerichteten Fasern an-, bzw. aufeinanderliegende Enden aufweisen. Daraus resultiert ein in der Orientierungsrichtung sich endlos erstreckender Verbund orientierter Einzelfasern. Erfindungsgemäß wird das Vlies so in den zu reinigenden Gasstrom eingebracht, dass die parallel ausgerichteten, längs gelegten Fasern gleichsinnig zur Schwerkraft orientiert sind. Wird ein dergestalt ausgerichtetes Vlies mit einem flüssigkeitsbelasteten Gasstrom beaufschlagt, so wirkt auf die auf den Fasern adsorbierten Flüssigkeitstropfen die Schwerkraft in Orientierungsrichtung der längs gelegten Fasern ein. Daraus resultiert ein kontinuierlicher, schwerkraftunterstützter Fluß der adsorbierten Flüssigkeit entlang der längs gelegten Fasern.

Die Eigenschaften des Fasermaterials beeinflussen dabei wesentlich die Adhäsion der Flüssigkeit an der Faser, die Kohäsion einzelner Flüssigkeitstropfen sowie den Flußwiderstand der Tropfen entlang der ausgerichteten, längs gelegten Fasern. Die vorgenannten Faktoren unterliegen einer komplexen Wechselbeziehung mit der Art der Flüssigkeit, ihrer Oberflächenspannung, ihrer Zusammensetzung und dem Anteil an zusätzlich in der Flüssigkeit absorbierten, festen Partikeln. Eine theoretische Vorhersage der Eigenschaften eines erfindungsgemäßen Filters in Abhängigkeit des verwendeten Materials ist für einen normalen Filtrationsbetrieb mit einem Gasstrom mit wechselnden Anteilen an Partikel- und Flüssigkeitsbelastung nicht möglich.

Überraschender Weise wurde gefunden, dass mit einem Vlies, welches parallel ausgerichtete, längs in gleichsinniger Orientierung zur Schwerkraft gelegte Fasern aufweist, zuverlässig die erfindungsgemäße Abtrennung von im Gasstrom enthaltener Flüssigkeit unter Vermeidung der geschilderten Nachteile erreicht wird, selbst wenn Vliese unterschiedlicher Faserart verwendet werden.

Sowohl aus homogen als auch aus heterogen belasteten Gasströmen konnten die flüssigen Verunreinigungen auf dem Faservlies in der Form von Tropfen abgeschieden werden. Hierbei begünstigt die Adhäsion zwischen Flüssigkeit und Vliesmaterial das Ausbilden von flächig auf den Fasern anhaftenden Tropfen, welche durch ihre erhöhte Querschnittsfläche mit erhöhter Wahrscheinlichkeit weitere Tröpfchen aus dem Gas kohäsiv binden. Weiterhin vereinigen sich aneinander grenzende Tropfen kohäsiv zu größeren Tropfen. Das Ausbilden von abgeschiedenen Tropfen, welche sich kohäsiv zu größeren vereinigen wird im Folgenden auch als Film bezeichnet. Schließlich bilden sich im Film kohäsiv Tropfen von einer Größe, bei der die längs zur Orientierungsrichtung der Fasern einwirkende Schwerkraft die Adhäsion deutlich übersteigt. Tropfen solcher Natur werden im Weiteren auch als Makrotropfen bezeichnet. Die Makrotropfen werden entlang der orientierten, längs gelegten Fasern in Schwerkraftrichtung im Vlies abgeführt.

Insbesondere bei ölhaltigen Belastungen wie z. B. Schneidöl-Emulsionen, zeigt ein Faservlies mit parallel ausgerichteten, längs gelegten Fasern, welche gleichsinnig zur Schwerkraft orientiert sind, den erfindungsgemäßen Effekt. Selbst bei Phasenseparation während des Abscheidens aus der Gasphase heraus auf die Faser bilden sich Makrotropfen, welche während des Abfließens kohäsiv weitere Tropfen von der Faser aufnehmen oder das kohäsive Zusammenfließen von abgeschiedenen, phasenreinen Tropfen durch Verdrängen während des Abfließens begünstigen.

Bei einer Ausrichtung der parallel ausgerichteten, längs gelegten Fasern zur Schwerkraft in einem Winkel zwischen 0 und 45° konnte bei konstantem Flüssigkeitsanteil im Gasstrom die kontinuierliche Ausbildung von Makrotropfen ähnlicher Größe gefunden werden. Der erfindungsgemäße Abfluß entlang der längs gelegten, orientierten Fasern bietet weiterhin den Vorteil, dass zusammen abgeschiedene, partikuläre Verunreinigungen durch die Makrotropfen mit ausgetragen und von der Oberfläche entfernt werden. Dadurch werden Verkrustungen an bzw. in dem Vlies vermieden und die Standzeit des Filterelementes wird beträchtlich erhöht.

Der Winkel zwischen der Orientierungsrichtung des Faservlieses und der Richtung der einwirkenden Schwerkraft kann erfindungsgemäß den Belastungen bzw. den Bedingungen während der Filtration eines Gasstromes angepaßt werden. So kann z.B. über eine drehbare Halterung der Faservliesmatte der Winkel gegenläufig zur Flüssigkeitsbelastung des Gasstromes reduziert werden oder bei Gasströmen mit periodischer Belastungsspitze der Partikelanteile der Winkel angepaßt zyklisch zwischen zwei Grenzwerten variiert werden. Bei der zyklischen Variation des Winkels kann so im Vlies ein Depot von Tropfen aufgebaut werden, welches bei einer Belastungsspitze mit Partikeln durch Verringerung des Winkels eine Vielzahl von Makrotropfen generiert, die während des Abfließens die Partikel binden und Abführen.

Die Strömungsverhältnisse des Gasstromes im Vlies lassen sich mit geeigneten Leitmitteln vorteilhaft einstellen, so dass die Effektivität des erfindungsgemäßen Vlieses weiter erhöht wird. So können die turbulenten Strömungsanteile im Vlies z.B. durch eine zuflußseitig angeordnete Anzahl von Leitgittern erhöht werden. Durch die Turbulenz wird eine verbesserte Abscheidung der Flüssigkeit auf der Faseroberfläche durch innige Durchdringung des Vlieses erzielt.

Feinste Flüssigkeitstropfen, wie sie z. B. in Aerosolen auftreten, können erfindungsgemäß verbessert abgetrennt werden, indem durch ein zuflußseitig angeordnetes Wirrfaservlies mit großem Faserzwischenraum die turbulenten Strömungsanteile stark erhöht werden. In einem abflußseitig direkt folgenden Faservlies mit parallel ausgerichteten, längs gelegten Fasern werden die Aersosoltropfen über Ausbildung eines Filmes und Abführen von Makrotropfen entlang der gleichsinnig zur Schwerkraft orientierten, längs gelegten Fasern entfernt. Zusätzlich vermeidet diese Vorgehensweise durch die innige Durchmischung des Gasstroms lokale Temperaturunterschiede und das damit möglich werdende Nachbilden von Aerosol.

Des Weiteren kann ein flüssigkeitsbelasteter Gasstrom, welcher Aerosol, Nebel und Tröpfchen enthält, durch eine Kaskade von erfindungsgemäßen Filtern gereinigt werden. So kann der Gasstrom z. B. durch ein erstes Faservlies mit parallel ausgerichteten, längsgelegten Fasern mit konstanter Faserdichte hindurchgeführt werden. Anschließendes Hindurchführen durch ein Wirrfaservlies mit einem nachfolgenden, zweiten Faservlies mit parallel ausgerichteten, längsgelegten Fasern mit gegebenenfalls zusätzlich erhöhter Faserdichte trennt insgesamt sowohl die Tröpfchen und den Nebel als auch das Aerosol über zwei Stufen zuverlässig ab.

Weitere Vorteile ergeben sich aus der nachfolgenden Beschreibung von Ausführungsbeispielen erläutert anhand der schematischen Figuren, sowie der veranschaulichenden Beschreibung einer möglichen technischen Umsetzung im Detail.
Figur 1 veranschaulicht mögliche erfindungsgemäße Anordnungen von Faservliesmatten in einem Gasstrom.
Figur 2 veranschaulicht eine mögliche Ausführungsform zur Reinigung eines Gasstroms, enthaltend Aerosole und Nebel.

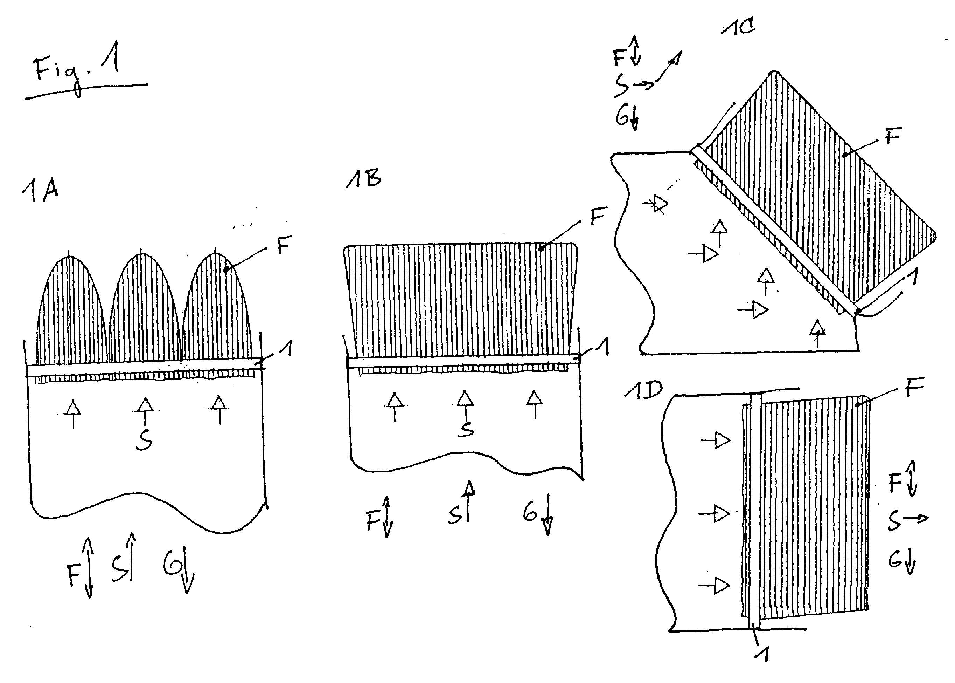

Vier mögliche, erfindungsgemäße Anordnungen eines Faservlieses mit parallel ausgerichteten, längsgelegten Fasern werden in Figur 1, bezeichnet mit den Buchstaben A bis D, schematisch veranschaulicht. Hierbei wird jeweils die Anordnung von erfindungsgemäßen Faservliesen mit Hilfe einer Befestigungsvorrichtung 1 in einem Gasstrom S dargestellt, wobei die Orientierungsrichtung der parallel ausgerichteten, längsgelegten Fasern durch eine Parallelschraffierung des Filterelementes hervorgehoben ist. Allen Ausführungsbeispielen ist gemeinsam, dass das jeweilige Filterelement sich gleichsinnig zur Richtung des zuströmenden Gases über die Haltevorrichtung 1 hinaus erstreckt. So wird die zur Filtration zur Verfügung stehende Oberfläche im Vergleich zum Volumenbedarf des Filterelementes groß gehalten. Erfindungsgemäß sind in allen möglichen Anordnungen die Filterelemente dergestalt befestigt, dass die Richtung der Schwerkraft G gleichsinnig zur Orientierungsrichtung der ausgerichteten längsgelegten Fasern F gehalten wird.

Figur 1A gibt schematisch die mögliche Anordnung eines Vlieses in Lamellen- bzw. Beutelform wieder. Eine solche Anordnung von Beuteln erlaubt die Verwendung einer größeren Menge an Filtermaterial pro Volumeneinheit innerhalb einer Gasleitung. Die Kapazität eines Filters kann auf diese Weise ohne zusätzlichen Platzbedarf erhöht werden.

Im Vergleich zeigt Figur 1B die Anordnung eines einzelnen Beutels innerhalb einer Gasleitung. Die Beutelöffnung ist hierbei im Querschnitt enger gefaßt, während der Beutel in Strömungsrichtung des Gases aufweitet. Dies bedingt im Eintrittsbereich in den Beutel eine erhöhte Strömungsgeschwindigkeit des Gases. Im nachfolgend aufweitenden Beutel nimmt die Strömungsgeschwindigkeit antiproportional zum durchströmten Volumen wieder ab. Dergestalt können z. B. über zuflußseitig angeordnete Leitbleche turbulente Strömungsanteile zunächst unter Beschleunigung des Gasstroms verstärkt und anschließend unter verbesserter Abscheidung im abflußseitigen Segment eines Beutels unter Verringerung der Strömungsgeschwindigkeit wieder ausgeglichen werden.

Figur 1C gibt schematisch eine Anordnung wieder, in der der Gasstrom einem diagonal angeordneten Filterelement zugeführt wird. Hierbei ist das Filterelement sowohl zur Einströmrichtung des Gases als auch zur Schwerkraft diagonal angeordnet. Diese Art der Anordnung erlaubt eine rechtwinkelige Ausrichtung der Orientierungsrichtung der längsgelegten Fasern zur Einströmrichtung des Gases. Durch diesen Kunstgriff wird die Wechselwirkung des Gasstroms mit den längs gelegten Fasern maximal gehalten und kann gegebenenfalls über einen zusätzlichen Wechsel der Strömungsrichtung im Filterelement noch verstärkt werden. Besonders bei stark mit Partikeln und Tröpfchen belasteten Gasen kann so über die Wechselwirkung innerhalb des Vlieses eine innigere Durchdringung des Filtermaterials herbeigeführt werden. Eine verbesserte Abscheidung von Partikeln und Tröpfchen wird erreicht. Hierbei werden sowohl Flüssigkeitsanteile als auch Partikel effektiver abgeschieden und erfindungsgemäß aus dem Gasstrom entfernt. Die Partikel werden gleichsinnig zur Schwerkraft aus dem Gasstrom abgeschieden, im Vlies von zusätzlich abgeschiedener Flüssigkeit gebunden und über Makrotropfen ausgetragen.

Figur 1D zeigt die Anordnung eines einzelnen Filterelementes in einer Gasleitung, bei der die Strömungsrichtung S des Gases rechtwinklig zur einwirkenden Schwerkraft geführt wird. Insbesondere bei stark flüssigkeitsbelasteten Gasströmen kann durch diese Anordnung über parallele Ausrichtung der orientierten, längsgelegten Faservliesfasern zur Schwerkraft die kontinuierliche Bildung von kleinstmöglichen Makrotropfen in Kombination mit schwerkraftunterstützter Flüssigkeitsabscheidung gewährleistet werden. Dabei wird die Flussrichtung der Makrotropfen im Wesentlichen senkrecht zur Gas-Strömung gehalten. Das einströmende, belastete Gas beeinflusst so nicht einmal anteilig die schwerkraftunterstützte Abführung der Makrotropfen im Vlies. Die Makrotropfen werden am Boden des Filterelementes gesammelt und über in die Halterung integrierbare Einrichtungen (hier nicht dargestellt) abgeschieden.

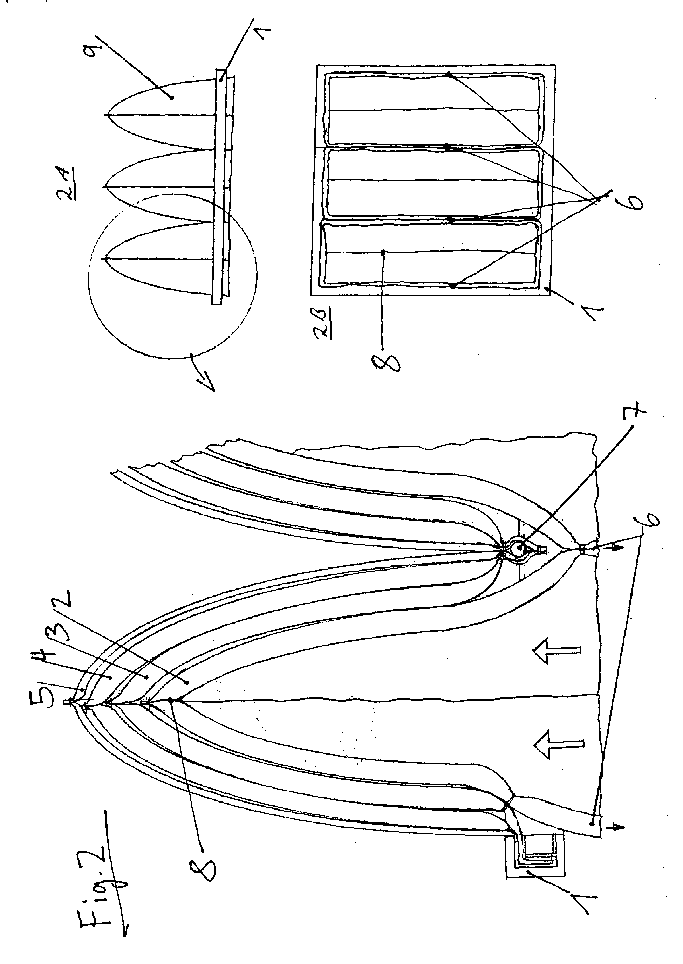

In einer möglichen, in Figur 2 schematisch veranschaulichten Ausführungsform wird eine Kaskade von Filtern über eine rechteckige Halterung 1 in einem Gasstrom befestigt. Die Kaskade von Filtern umfasst ein Faservlies 2 mit parallel ausgerichteten, längsgelegten Fasern, sowie ein zweites Faservlies 4 mit parallel ausgerichteten, längsgelegten Fasern mit gegebenenfalls erhöhter Faserdichte und ein zuflussseitig dazu angeordnetes Wirrfaservlies 3. Abflussseitig ist die Filterkaskade durch ein Glasfasermaterial 5 begrenzt, welches feinste, flüssige Aerosolen aus dem Gasstrom entfernt und durch eine feinporige Struktur eine zusätzliche Homogenisierung des durchtretenden, gereinigten Gasstromes durch abschließende Verwirbelung gewährleistet.

In der Ausführungsform gemäß Figur 2 werden Makrotropfen im Faservlies zu unterhalb der Halterung 1 angeordneten freien Vlieskanten 6 abgeführt und dort über Einrichtungen zur Flüssigkeitsableitung (nicht dargestellt) entfernt. Im zweiten Faservlies 4 erfolgt die Agglomeration des verbleibenden Aerosols nach Erhöhung der turbulenten Strömungsanteile durch das Wirrfaservlies 3. Bei besonders feinteiligen Aerosolen kann die Agglomeration über eine erhöhte Faserdichte und/oder eine erhöhte Dicke der Faservliesmatte zusätzlich verstärkt werden. Das zweite Faservlies führt Makrotropfen zum einen zu seinen in der Halterung 1 sowie an Stützholmen 7 befestigen Enden ab. Dort wird die Flüssigkeit über wahlweise in die Halterung 1 bzw. die Befestigungsvorrichtungen 7 integrierte Einrichtungen (hier nicht dargestellt) abgeführt. Zum anderen werden die Makrotropfen des zweiten Faservlieses über Brückenelemente 10 an das Faservlies 2 weitergegeben und in bekannter Weise abgeführt.

In der möglichen Ausführungsform gemäß der Figuren 2A und 2B sind insgesamt drei im Querschnitt parabelförmige Beutel 9 in einer Halterung 1 angeordnet. Jeder Beutel weist zwei Seitensegmente auf, welche ausgehend von der in Richtung des zuströmenden Gases ausgerichteten Parabelöffnung gebogt aufeinander zulaufen und mittig zum parabelförmigen Querschnitt eine gemeinsame Stoßkante 8 ausbilden.

Entlang dieser Stoßkante sind die einzelnen Faservliesmatten eines jeden Beutels, in Gasströmungsrichtung aufweisend das Faservlies 2, das Wirrfaservlies 3, das zweite Faservlies 4 sowie das Glasfasermaterial 5, miteinander verbunden. Hierbei weisen die Stoßkanten 8 ein spitzbogenartiges Querschnittsprofil auf. Durch diesen Kunstgriff wird in der hier dargestellten Ausführungsform auch in der abflussseitig angeordneten Parabelspitze der Winkel zwischen der Orientierungsrichtung der ausgerichteten, längsgelegten Fasern und der einwirkenden Schwerkraft zwischen 0 und 45° gehalten.

In einer möglichen technischen Umsetzung wurde ein Filterelement umfassend einen Beutel mit mehrlagiger Anordnung von Filtermedien analog zu Figur 2 in einen belasteten Gasstrom in einer Ausrichtung analog zur Figur 1B eingebracht.

Der Gasstrom wurde ausgehend von einer Absauganlage einer Vorrichtung zur Bearbeitung von Werkzeugstählen dem Filterelement mit zwischen 1 cm/s und 3 m/s variierter Geschwindigkeit zugeführt. In der Vorrichtung zur Bearbeitung von Werkzeugstählen wurde Werkzeugstahl verschiedener Legierungen mit Schleifscheiben verschiedenster Art unter dauerhafter Kühlung mit 120 bis 180 Liter Schneidöl pro Minute bearbeitet. Verschiedene Schneidöle wurden dabei in mehreren Tests jeweils im Kreis geführt. Bei konstanter Strömungsgeschwindigkeit wurden so Belastungen von bis zu 1400 mg pro Kubikmeter Gas eingestellt. Das abgesaugte Gas war mit Öl-Aerosol, -Nebel und -Tröpfchen sowie Stahl-Partikeln und Schneidmittel-Partikeln belastet. Das Aerosol wies hierbei im Mittel eine Tröpfchengröße kleiner 5 Mikrometer, der Nebel eine Tröpfchengröße kleiner 50 Mikrometer und die Tröpfchen einen Durchmesser von über 50 Mikrometer auf. Die freigesetzten Stahlpartikel, welche mit ausgetragen wurden, zeigten Durchmesser von bis zu 5 Mikrometer.

Als Filtermedien mit längs gelegten, orientierten Fasern, wurden unterschiedliche Polymer-Fasermaterialien mit einer Faserlänge von 10 mm und mehr verwendet. Die Faservliesmatten wiesen bei einer Faserfeinheit im Bereich von 5 bis 15 dtex und einer Dicke von ca. 2 cm eine mittlere Flächenmasse 150 bis 250 g pro Quadratmeter auf.

Als Wirrfaservlies diente jeweils ein Polymerfaservlies gleichen Materials, gleicher Flächenmasse und von ähnlicher Dicke bei vergleichbarem Strömungswiderstand. Der Strömungswiderstand lag hierbei, durch die chaotische Anordnung einer ähnlich feinen Faser mit einer mittleren Faserlänge von 30 mm und mehr begründet, stets geringfügig höher.

Als abschließendes Filtermedium kam stets ein Glasfasermaterial mit einer Flächenmasse von 90 g/m² und einer Durchlässigkeit von 1% zur Verwendung (bezogen auf 3-Mikrometer-DEHS Prüfaerosol; bis zu 0,5 m/s Gasgeschwindigkeit).

Der Wirkungsgrad der Filtermaterialien wurde durch Analyse des Gasstroms zu - und abflussseitig zu den Filtermedien ermittelt. Weiterhin diente die Belastung des abschließenden Filtermediums selbst als zusätzliches Indiz für die Wirksamkeit der zuflussseitig angeordneten Filterkaskade. Der Strömungswiderstand der Vliese konnte über die abflussseitige Strömungsgeschwindigkeit charakterisiert werden. Als Vergleichsvorrichtung diente eine analog aufgebaute Filtervorrichtung, bei der jeweils nur Wirrfaservliese Verwendung fanden.

Im Vergleich zeigten sämtliche Vliese, umfassend sowohl lipophile Polymervliese aus PVC, polymeren Kohlenwasserstoffen sowie fluorierten Polyalkylen als auch hydrophile Polymervliese auf Polyamid- und Polyacrylnitril-Basis, grundsätzlich das gleiche Verhalten: Während die Wirrfaservliese einen rasch ansteigenden, sehr hohen Strömungswiderstand und eine gleichsinnig abfallende Wirksamkeit zeigten, erwiesen sich die Polymervliese mit längs gelegten Fasern, nach kurzer Anlaufphase, mit leicht erhöhtem Strömungswiderstand über mehrere Stunden hinweg als dauerhaft und konstant wirksam. Das abschließende Filtermedium aus Glasfasermaterial zeigte im Falle von zum Vergleich zuflussseitig angeordneten Wirrfaservliesen eine vielfach höhere Belastung, was die verringerte Wirksamkeit der Wirrfaservliese bestätigte. Des Weiteren war die höhere Belastung durch lokale Maxima gekennzeichnet, womit ein uneinheitliches Durchströmen des Glasfasermaterials und das Austragen von Tropfen einherging.

Die kurze Anlaufphase der erfindungsgemäßen Filter kann dadurch erklärt werden, dass nach Ausbilden eines Films auf den Fasern eine verbesserte Abscheidung weiterer Verunreinigungen aus dem Gasstrom unter konstanter Ausbildung von Makrotropfen erfolgt. Erstaunlicherweise wurde dieses Verhalten bei sämtlichen Fasermaterialien beobachtet.

Bemerkenswert war das Filtrationsverhalten bei einem Schneidöl auf wäßriger Basis. Hier zeigte z. B. ein Vlies auf Poly-Urethan-Basis während der Anlaufphase eine Wirksamkeit von 95% bezogen auf Teilchen ab 3 Mikrometern Durchmesser. Nachfolgend stieg die Wirksamkeit unter Ausbildung eines Films auf 98% bei einer Ungenauigkeit von 1%.

Im Vergleich hierzu zeigte ein Polyestervlies zuflussseitig zum Glasfasermaterial eine Wirksamkeit von über 99%. Um einen Meßfehler ausschließen zu können wurde die Wirksamkeit für Teilchen ab 2 Mikrometer Durchmesser bei einer konstanten Belastung von 1004 mg/m³ (Schwankung ca. 1%) wiederholt. Hierbei wurde eine Wirksamkeit des Polyestervlieses von über 97% mit einer Schwankung von 1% ermittelt. Die Faserlänge des Polyestervlieses betrug um die 50 mm, seine Faserfeinheit 8 - 9 dtex und seine Flächenmasse 175 g pro m². Die Erfinder gehen davon aus, dass Polyester-Vliese mit längs gelegten Fasern auf Grund ihrer vergleichsweise besseren Naßfestigkeit und ihrer leicht hydrophilen Faser-Oberfläche in Kombination mit den vorgenannten technischen Parametern insbesondere zum erfindungsgemäßen Abtrennen von Flüssigkeiten, welche neben Öl auch Wasser enthalten, geeignet sind. Die leicht hydrophile Oberfläche trägt dem Erklärungsmodell folgend auch zur Abscheidung von Ölen bei, während bei anderen Vliesen entweder Wasser oder Öl nur erschwert oberflächlich abgeschieden werden können.

Die geschilderten Ausführungsformen sind nur einige Möglichkeiten der erfindungsgemäßen Abtrennung von Flüssigkeiten aus einem Gasstrom. Es versteht sich, dass die Grundidee der erfindungsgemäßen Lösung über die zur Veranschaulichung aufgeführten konstruktiven und verfahrenstechnischen Maßnahmen hinausgeht und diese Maßnahmen sowohl einzeln als auch in Kombination inklusive weiterer, dem Fachmann geläufiger Maßnahmen, umfasst.

### Bezugszeichenliste

- 1.: rechteckige Halterung
- 2.: Faservlies mit parallel ausgerichteten, längs gelegten Fasern
- 3.: Wirrfaservlies
- 4.: zweites Faservlies mit parallel ausgerichteten, längs gelegten Fasern mit ggf. erhöhter Faserdichte
- 5.: Glasfasermaterial
- 6.: Vlieskanten des Faservlieses 2
- 7.: Stützholme
- 8.: Stoßkante
- 9.: Beutel
- 10.: Brückenelement

## Patentansprüche

1. Verfahren zum Abtrennen von Flüssigkeiten aus einem Gasstrom mit Hilfe von Faservliesmatten, **dadurch gekennzeichnet, dass** der flüssigkeitshaltige Gasstrom durch ein Faservlies mit parallel ausgerichteten, längsgelegten Fasern geführt wird, wobei Tropfen auf der Oberfläche der Fasern durch Abscheiden der Flüssigkeit aus dem Gasstrom ausgebildet werden, durch die Tropfen auf der Oberfläche der Fasern ein Film ausgebildet wird, durch kohäsives Vereinigen von Tropfen Makrotropfen im Vlies ausgebildet werden und die Makrotropfen schwerkraftunterstützt entlang der gleichsinnig zur Schwerkraft ausgerichteten Fasern abgeführt werden.

2. Verfahren nach Anspruch 1, **dadurch gekennzeichnet, dass** die längsgelegten, orientierten Fasern in einem Winkel von 0 bis 45° zur einwirkenden Schwerkraft gehalten werden.

3. Verfahren nach dem vorhergehenden Anspruch, **dadurch gekennzeichnet, dass** der Winkel zyklisch variiert wird.

4. Verfahren nach einem der vorhergehenden Ansprüche, **dadurch gekennzeichnet, dass** der Gasstrom zuvor durch eine Anordnung von Leitmitteln geleitet wird und unmittelbar darauffolgend unter Erhalt der erzeugten turbulenten Strömungsanteile durch das Faservlies hindurch geleitet wird.

5. Verfahren nach einem der vorhergehenden Ansprüche, **dadurch gekennzeichnet, dass** aus dem Gasstrom abschließend feinste, flüssige Aerosole über ein feinporiges Faservlies entfernt und der Gasstrom homogen verwirbelt wird.

6. Verfahren nach einem der vorhergehenden Ansprüche, **dadurch gekennzeichnet, dass** der Gasstrom nach Durchtritt durch das Faservlies mit parallel ausgerichteten, längsgelegten Fasern durch ein Wirrfaservlies geführt wird, wobei turbulente Strömungsanteile des Gasstroms im Wirrfaservlies verstärkt werden, dass der Gasstrom unter Erhalt der verstärkt turbulenten Strömungsanteile durch ein zweites Faservlies mit parallel orientierten, längsgelegten Fasern mit gegebenenfalls erhöhter Faserdichte geführt wird, wobei Tropfen auf der Oberfläche der Fasern durch Abscheiden der Flüssigkeit aus dem innig verwirbelten Gasstrom ausgebildet werden, durch die Tropfen auf der Oberfläche der Fasern ein Film ausgebildet wird, durch kohäsives Vereinigen von Tropfen Makrotropfen im Vlies ausgebildet werden und die Makrotropfen schwerkraftunterstützt entlang der gleichsinnig zur Schwerkraft ausgerichteten Fasern abgeführt werden.

7. Vorrichtung zum Abtrennen von Flüssigkeiten aus einem in einer Gasleitung geführten Gasstrom mit Hilfe von Faservliesmatten, **dadurch gekennzeichnet, dass** in der Vorrichtung mindestens eine Faservliesmatte mit parallel ausgerichteten, längsgelegten Polyester-Fasern den gesamten Querschnitt der Gasleitung verdeckend in einer Halterung angeordnet ist, wobei die parallel ausgerichteten, längsgelegten Fasern im Wesentlichen parallel zur Schwerkraft angeordnet sind.

8. Vorrichtung nach Anspruch 7, **dadurch gekennzeichnet, dass** die Faservliesmatte in Form von mindestens 2 Einzelabschnitten, aufweisend eine gemeinsame, gasdicht miteinander verbundene Stoßkante, in der Vorrichtung angeordnet ist.

9. Vorrichtung nach Anspruch 7 oder 8, **dadurch gekennzeichnet, dass** die parallel ausgerichteten, längsgelegten Fasern in einem Winkel zwischen 0 und 45 ° zur Richtung der Schwerkraft angeordnet sind.

10. Vorrichtung zum Abtrennen von Flüssigkeiten aus einem in einer Gasleitung geführten Gasstrom nach Anspruch 7, **dadurch gekennzeichnet, dass** mindestens ein im Querschnitt parabelförmig ausgebildeter Beutel (9) in einer Halterung (1) im Gasstrom angeordnet ist, wobei der Beutel (9) mit zur Zuströmrichtung des Gases hin ausgerichteter Öffnungen angeordnet ist, wobei weiterhin der Beutel zwei Seitensegmente aufweist, welche gasabflußseitig eine gemeinsame Stoßkante (8) ausbildend angeordnet sind, wobei die Segmente entlang ihrer gemeinsamen Stoßkante in einem spitzbogenartigen Querschnittsprofil angeordnet sind, und dass die Segmente in einer Kaskade angeordnete Materialschichten aufweisen, bestehend aus in Zuströmrichtung des Gases hintereinander angeordnetem Polyestervlies (2) mit parallel ausgerichteten, längs gelegten Fasern, Wirrfaservlies (3), zweitem Polyestervlies (4) mit parallel ausgerichteten, längs gelegten Fasern mit gegebenenfalls erhöhter Faserdichte und feinporigern, strukturiertem Glasfasermaterial (5), wobei jeweils gleiche Materialschichten entlang ihrer gemeinsamen Stoßkante jeweils in spitzbogenartigem Querschnittsprofil miteinander verbunden sind, dass die freien, zuflußseitigen Vlieskanten (6) des Polyestervlieses (2) zuflußseitig zur Halterung (1) angeordnet sind und die freien Vlieskanten des zweiten Polyestervlieses (4) in der Halterung (1) und/oder an Stützholmen (7) befestigt sind und dass mindestens ein Brückenelement (10) nahe der freien Vlieskanten des Polyestervlieses (2) das Polyestervlies (2) mit dem zweiten Polyestervlies (4) verbindend angebracht ist.
